# EUROPEAN PATENT SPECIFICATION

(11) **EP 4 587 741 B1**
(45) Date of publication and mention of the grant of the patent: **29.07.2026**
(21) Application number: 23785919.4
(22) Date of filing: 13.09.2023
(51) Int. Cl.: F16L 27/093, F16L 39/06, F16L 27/087

(54) **HIGH PRESSURE PROCESS SWIVEL**
HOCHDRUCKPROZESSDREHGELENK
TÊTE D'INJECTION DE PROCESSUS À HAUTE PRESSION

(30) Priority: 16.09.2022 US 202263407453 P
(43) Date of publication of application: 23.07.2025
(73) Proprietor: Moog Inc., East Aurora, NY 14052 (US)
(72) Inventor: FALCONER, Darcy, R., Dartmouth NS B2W 6E1 (CA)
(74) Representative: Hey, Andrew Stuart
(86) International application number: PCT/US2023/032584
(87) International publication number: WO 2024/059098

(56) References cited:
- EP-A1- 2 360 089
- GB-A- 2 171 765
- US-A- 4 828 292
- US-A- 5 199 748

## Description

### TECHNICAL FIELD

The presently disclosed subject matter relates generally to high pressure process swivels, and more particularly to a high pressure process swivel seal system.

### BACKGROUND

A process swivel assembly generally provides fluid or gas transfer across a rotating interface. Process swivel assemblies and swivel stack systems are used, for example, in floating or marine production systems in which one or more fixed production risers are connected to a surface vessel.

These systems require swivel assemblies because the riser remains in a fixed position while the vessel is free to rotate relative to the riser due to wind and current effects. Such production systems may include offshore oil and gas industry systems in which large floating vessels, such as a floating production storage and offloading (FPSO) vessel, are used to receive produced hydrocarbons from subsea wells or other subsea equipment. The floating vessel may be moored to a single point mooring (SPM) system, which permits the vessel to weathervane and rotate 360 degrees about a single mooring point. The vessels use swivel assemblies to allow for the transfer of fluids across the rotary interface when the vessel weathervanes or rotates around the mooring site. Furthermore, since a plurality of risers may be involved, the swivels may need to be stacked in order to have the capability of accommodating multiple fluid lines or risers. Thus, separate swivel sections may need to be stacked on top of each other with a swivel base or "inlet-outlet section" attached to the riser and fixed relative to the sea floor and the rotating swivel sections attached via torque arms to the vessel. Patent application publication GB 2171765 A relates to a fluid joint between a housing fed with fluid under pressure and a rotary shaft to receive the fluid in a bore, comprises a sleeve which is a close fit on a shaft-sleeve fixed to the shaft. Patent application publication US 4828292 A relates to a fluid swivel that enables the measurement and the adjustment of separation of seal surfaces. Patent application publication US 5199748 A relates to a rotary coupling for two different fluids, which includes a fixed housing and hollow shaft mounted rotatably but axially immovably in the housing. Patent application publication EP 2360089 A1 relates to a fluid swivel for allowing fluid transfer across a rotary interface between the end of a fluid line connected to the seabed and product piping on a vessel for gas and oil production.

### BRIEF SUMMARY

The present invention provides a rotary interface as set out in appended claim 1. With parenthetical reference to corresponding parts, portions, or surfaces of the disclosed embodiment, merely for the purposes of illustration and not by way of limitation, the present disclosure provides a rotary interface (15) comprising: an inner housing (20); at least one outer housing (30) rotatably supported on the inner housing so that the outer housing is free to rotate about a center axis (x-x) relative to the inner housing at a rotary interface between the inner housing and the outer housing; an annular fluid exchange chamber (40) formed at the rotary interface between the outer housing and the inner housing; an inner fluid port (21) in the inner housing communicating with the fluid exchange chamber; an outer fluid port (31) in the outer housing communicating with the fluid exchange chamber; the rotary interface comprising an annular rotary gap (41, 141) between an inner-facing surface (35, 135) of the outer housing and an outer-facing surface (25, 125) of the inner housing; the rotary gap extending in an axial direction from the fluid exchange chamber; an annular seal carrier (45, 145) disposed in the rotary gap between the inner-facing surface of the outer housing and the outer-facing surface of the inner housing; the seal carrier comprising an outer-facing carrier surface (46, 146) opposed to the inner-facing surface of the outer housing and an inner-facing carrier surface (47, 147) opposed to the outer-facing surface of the inner housing; at least an annular first outer seal (50A, 50B, 50C, 150A, 150B, 150C) disposed in an outer carrier gap (52, 152) between the outer-facing carrier surface of the seal carrier and the inner-facing surface of the outer housing; at least an annular first inner seal (55A, 55B, 55C, 155A, 155B, 155C) disposed in an inner carrier gap (57, 157) between the inner-facing carrier surface of the seal carrier and the outer-facing surface of the inner housing; the seal carrier having a maximum radial width (44, 144) from the outer carrier gap to the inner carrier gap; the rotary gap comprising an annular throat gap portion (42, 142) having a maximum radial width (43, 143) between the inner-facing surface of the outer housing and the outer-facing surface of the inner housing; the throat gap portion of the rotary gap disposed between the fluid exchange chamber and the seal carrier; and the maximum radial width of the throat gap portion of the rotary gap being less than the maximum radial width of the seal carrier.

The rotary interface may comprise a filter (70, 170) disposed in the rotary gap between the fluid exchange chamber and the seal carrier. The filter may comprise an annular seal filter disposed in the rotary gap between the throat gap portion of the rotary gap and the seal carrier and configured to protect the first inner seal (55A, 155A) and the first outer seal (50A, 150A) from fluid contaminates. The throat gap portion (142) of the rotary gap may comprise an annular bend between the fluid exchange chamber and the seal carrier.

The rotary interface may comprise an annular second outer seal (50B, 150B) disposed in the outer carrier gap between the outer-facing carrier surface of the seal carrier and the inner-facing surface of the outer housing, and an annular second inner seal (55B, 155B) disposed in the inner carrier gap between the inner-facing carrier surface of the seal carrier and the outer-facing surface of the inner housing. The outer-facing carrier surface of the seal carrier may comprise an outer pressure sensitive surface area, the inner-facing carrier surface of the seal carrier may comprise an inner pressure sensitive surface area, and the outer and inner pressure sensitive surface areas may be pressure balanced. The rotary interface may comprise: an annular outer fluid chamber (53, 153) formed in the outer carrier gap radially between the outer-facing carrier surface of the seal carrier and the inner-facing surface of the outer housing and axially between the first outer seal (50A, 150A) and the second outer seal (50B, 150B); an annular inner fluid chamber (58, 158) formed in the inner carrier gap radially between the inner-facing carrier surface of the seal carrier and the outer-facing surface of the inner housing and axially between the first inner seal (55A, 155A) and the second inner seal (55B, 155B); a pressurized balancing fluid in the outer fluid chamber; a pressurized balancing fluid in the inner fluid chamber; and wherein the outer and inner fluid chambers are pressure balanced. The rotary interface may comprise a fluid passage (49, 149) in the carrier between the outer fluid chamber and the inner fluid chamber and the pressurized balancing fluid in the outer fluid chamber may communicate with the pressurized balancing fluid in the inner fluid chamber.

The rotary interface may comprise: a first number of annular outer seals disposed in the outer carrier gap between the outer-facing carrier surface of the seal carrier and the inner-facing surface of the outer housing; a second number of annular inner seals disposed in the inner carrier gap between the inner-facing carrier surface of the seal carrier and the outer-facing surface of the inner housing; and the first number of annular outer seals may be equal to the second number of annular inner seals. The first outer seal (150A, 150B) may comprise an annular primary seal (72A, 72B) and an annular back-up ring (73A, 73B) disposed in an outer annular gland (151A, 151B) of a gland body (154A, 154B) of the seal carrier. The back-up ring (73A, 73B) may be formed from the gland body (154A, 154B) of the seal carrier. The back-up ring (73A, 73B) may comprise a ring material composition, the gland body (154A, 154B) of the seal carrier may comprise a body material composition, and the ring material composition may be the same as the body material composition. The primary seal may comprise a seal jacket (74) and a seal spring energizer (75).

The seal carrier may be rotationally coupled to the outer housing such that the seal carrier rotates about the center axis relative to the inner housing with rotation of the outer housing about the center axis relative to the inner housing. The seal carrier may comprise a plurality of outwardly-facing teeth (61) in meshed engagement with a plurality of inwardly-facing grooves (63) of the outer housing such that the seal carrier rotates with rotation of the outer housing relative to the inner housing. The seal carrier may comprise an anti-backlash interface (66, 67) between each of the plurality of outwardly-facing teeth of the seal carrier and the plurality of inwardly-facing grooves of the outer housing. The anti-backlash interface may comprise a wear pad (66, 67) between each of the plurality of outwardly-facing teeth of the seal carrier and the corresponding plurality of inwardly-facing grooves of the outer housing. Each wear pad may be bonded (91A, 91B) to the respective corresponding plurality of outwardly-facing teeth of the seal carrier. Each of the plurality of inwardly-facing grooves of the outer housing may comprise a rotational bearing surface (63A, 63B) facing an opposed wear surface (66A, 67A) of each of the corresponding plurality of outwardly-facing teeth of the seal carrier and each of the rotational bearing surfaces of the plurality of inwardly-facing grooves of the outer housing may be orientated on a respective imaginary plane (90A, 90D) extending radially from the center axis. The opposed wear surface (66A, 67A) of each of the corresponding plurality of outwardly-facing teeth of the seal carrier may be orientated on a respective imaginary plane (90A, 90B) extending radially from the center axis. The rotary interface may comprise a rotary bearing (65, 165) between the seal carrier and the inner housing.

The outer housing may comprise an annular support plate (80, 180) operatively configured to retain the seal carrier axially relative to the outer housing; and the annular support plate may comprise a plurality of separate segments (80A, 80B, 80C, 180A, 180B 180C) removably attached to a body portion (36, 136) the outer housing; whereby the segments may be detached from the body portion of the outer housing to provide access to the seal carrier. The plurality of separate segments of the annular support plate may comprise a first segment (280A) and a second segment (280B) adjacent to the first segment and the rotary interface may comprise a radially extending drainage passage (76). The seal carrier may comprise an annular flange portion (64, 164) operatively retained axially between the body portion of the outer housing and the annular support plate of the outer housing. The outer housing may comprise an annular cover plate (81, 181) disposed axially between the annular support plate of the outer housing and the seal carrier.

The rotary gap may comprise an upper gap (41) extending in a first axial direction from the fluid exchange chamber and a lower gap (141) extending in a second axial direction from the fluid exchange chamber. The seal carrier (45) may be disposed in the upper gap (41) of the rotary gap between the inner-facing surface (35) of the outer housing and the outer-facing surface (25) of the inner housing; the upper gap may comprise the throat gap portion (42); an annular second seal carrier (145) may be disposed in the lower gap of the rotary gap between the inner-facing surface (135) of the outer housing and the outer-facing surface (125) of the inner housing; the second seal carrier may comprise a second outer-facing carrier surface (146) opposed to the inner-facing surface of the outer housing and a second inner-facing carrier surface (147) opposed to the outer-facing surface of the inner housing; at least an annular second outer seal (150A, 150B, 150C) may be disposed in a second outer carrier gap (152) between the second outer-facing carrier surface of the second seal carrier and the inner-facing surface of the outer housing; at least an annular second inner seal (155A, 155B, 155C) may be disposed in a second inner carrier gap (157) between the second inner-facing carrier surface of the second seal carrier and the outer-facing surface of the inner housing; the second seal carrier may have a maximum radial width (144) from the second outer carrier gap to the second inner carrier gap; the lower gap of the rotary gap may comprise an annular second throat gap portion (142) having a maximum radial width (143) between the inner-facing surface of the outer housing and the outer-facing surface of the inner housing; the second throat gap portion of the lower gap may be disposed between the fluid exchange chamber and the second seal carrier; and the maximum radial width of the second throat gap portion of the rotary gap may be less than the maximum radial width of the second seal carrier.

The outer housing may comprise an annular retaining plate (281) operatively configured to retain the seal carrier axially relative to the outer housing; the retaining plate may have an annular retaining surface (281A) facing an opposed annular bearing surface (64A) of the carrier and an axial lubricating gap (278) between the retaining surface of the retaining plate and the bearing surface of the carrier; and the outer housing may have a fluid passage communicating with the axial lubricating gap and operatively configured to provide pressurized fluid to the axial lubricating gap. The rotary interface may comprise a lubricated rotary bearing between the seal carrier and the inner housing and the lubricated rotary bearing may be in fluid communication with the axial lubricating gap.

### BRIEF DESCRIPTION OF THE DRAWINGS

The accompanying drawings are incorporated herein as part of the specification. The drawings described herein illustrate embodiments of the presently disclosed subject matter and are illustrative of selected principles and teachings of the present disclosure. However, the drawings do not illustrate all possible implementations of the presently disclosed subject matter and are not intended to limit the scope of the present disclosure in any way.
FIG. 1 is a side perspective and partial sectional view of an embodiment of an improved process swivel.
FIG. 2 is an enlarged vertical radial cross-sectional view of the process swivel rotary interface seal system shown in FIG. 1, taken within the indicated circle of FIG. 1.
FIG. 3 is an enlarged partial cross-sectional view of the rotary interface seal system shown in FIG. 2.
FIG. 4 is an enlarged cross-sectional view of the upper rotary interface seal system shown in FIG. 2.
FIG. 5 is an enlarged cross-sectional view of the lower rotary interface seal system shown in FIG. 2.
FIG. 6 is an enlarged partial cross-sectional view of the lower high pressure rotary interface seal system shown in FIG. 5.
FIG. 7 is an enlarged partial cross-sectional view of a carrier seal shown in FIG. 6.
FIG. 8 is a partial perspective view of the process swivel junction between the upper and middle swivel stacks shown in FIG. 1.
FIG. 9 is an enlarged partial cross-sectional view of the process swivel junction shown in FIG. 8.
FIG. 10 is a partial cross-sectional and perspective view of the upper rotary interface seal system shown in FIG. 4 partially disassembled.
FIG. 11 is an enlarged top plan view of the carrier tooth engagement shown in FIG. 10.
FIG. 12 is an enlarged cross-sectional view of an alternative embodiment of the upper rotary interface seal system shown in FIG. 4.

### DETAILED DESCRIPTION OF THE EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

It is to be understood that the specific assemblies and systems illustrated in the attached drawings and described in the following specification are simply exemplary embodiments of the inventive concepts defined herein. Hence, specific dimensions, directions, or other physical characteristics relating to the embodiments disclosed are not to be considered as limiting, unless expressly stated otherwise. Also, although they may not be, like elements in various embodiments described herein may be commonly referred to with like reference numerals within this section of the application.

It is to be appreciated that the present teaching is by way of example only, not by limitation. The concepts herein are not limited to use or application with a specific system or method. Thus, although the instrumentalities described herein are for the convenience of explanation, shown and described with respect to exemplary embodiments, it will be appreciated that the principles herein may be applied equally in other types of systems and methods involving high pressure process swivels.

Where they are used herein, the terms "first," "second," and so forth, do not necessarily denote any ordinal, sequential or priority relation, but are simply used to distinguish one element or set of elements more clearly from another element or set of elements, unless specified otherwise.

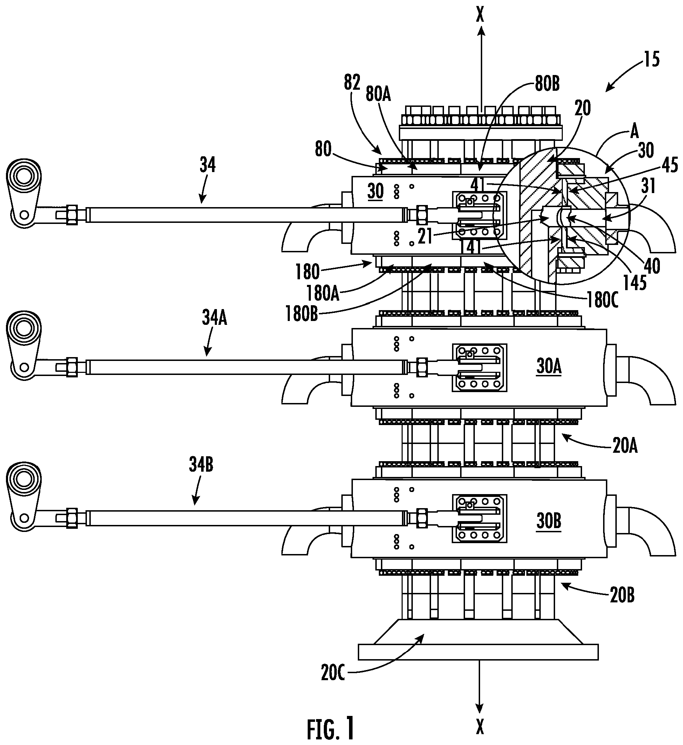

An improved high pressure process swivel is provided, a first embodiment of which is generally indicated at 15. As shown in FIG. 1, in this embodiment process swivel 15 is a three pass swivel stack having inner shaft or housing segments 20, 20A and 20B supporting three separate stacked swivel outer housings or components 30, 30A and 30B, respectively. In this embodiment, base or mounting flange 20C of the inner housings 20, 20A and 20B is operatively attached to the riser of a production system moored to the ocean floor and the swivel outer housings 30, 30A and 30B are each attached to a floating vessel via torque arms 34, 34A and 34B, respectively. Outer housings 30A, 30B and 30C are each rotatably supported on inner housings 20, 20A and 20B so that they are each operatively free to rotate about center axis x-x relative to inner housing segments 20, 20A, 20B and 20C at rotary interfaces between inner housings 20, 20A and 20B and outer housings 30A, 30B and 30C, respectively. As each of outer housings 30, 30A and 30B are operatively the same, this disclosure describes the seal system between inner housing 20 and outer housing 30 with the understanding that each of outer housings 30A and 30B have a similar structure and rotary interface seal system with inner housings 20A and 20B. While three stacked outer housings are shown, the number of outer housings in rotary engagement with an inner housing may be varied depending on the desired application. Also, the system may be used in alternative applications to an offshore production system.

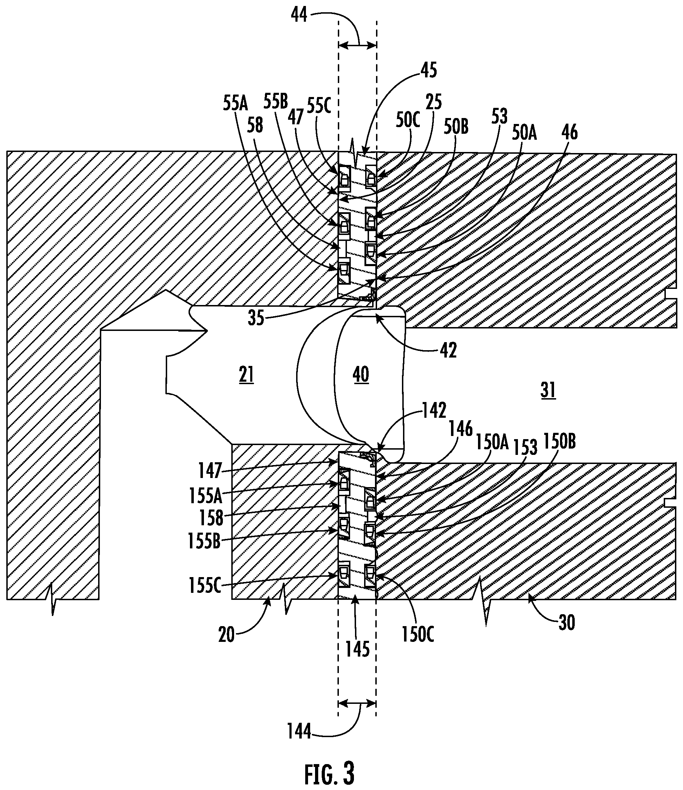

As shown, outer housing 30 is rotatably supported on inner housing 20 so that outer housing 30 is free to rotate about center axis x-x relative to inner housing 20 at the rotary interface between inner housing 20 and outer housing 30. Annular fluid exchange cavity, passage, or chamber 40 is formed at the rotary interface between outer housing 30 and inner housing 20. In this embodiment, as shown in FIG. 3, the shape and size of annular cavity 40 directs fluid in such a way that contaminants will tend not to settle at the rotating interface, particularly lower gap 141 of the rotating interface. Inner fluid passage 21 in inner housing 20 communicates with the left side of annular chamber 40 and outer fluid passage 31 in outer housing 30 communicates with the right side of annular chamber 40. The rotary interface between inner housing 20 and outer housing 30 is defined by upper annular rotary gap 41, which is above annular chamber 40 and between upper inner-facing surface 35 of outer housing 30 and upper outer-facing surface 25 of inner housing 20, and lower annular rotary gap 141, which is below annular chamber 40 and between lower inner-facing surface 135 of outer housing 30 and lower outer-facing surface 125 of inner housing 20. Upper annular rotary gap 41 is in limited fluid communication with annular fluid chamber 40 via upper annular throat 42 and lower annular rotary gap 141 is in limited fluid communication with annular fluid chamber 40 via lower annular throat 142. As shown, upper rotary gap 41 includes a radially widened portion above narrowed throat 42 that is configured to receive specially configured annular seal carrier 45. Similarly, lower rotary gap 141 includes a radially widened portion below narrowed throat 142 that is configured to receive specially configured annular seal carrier 145.

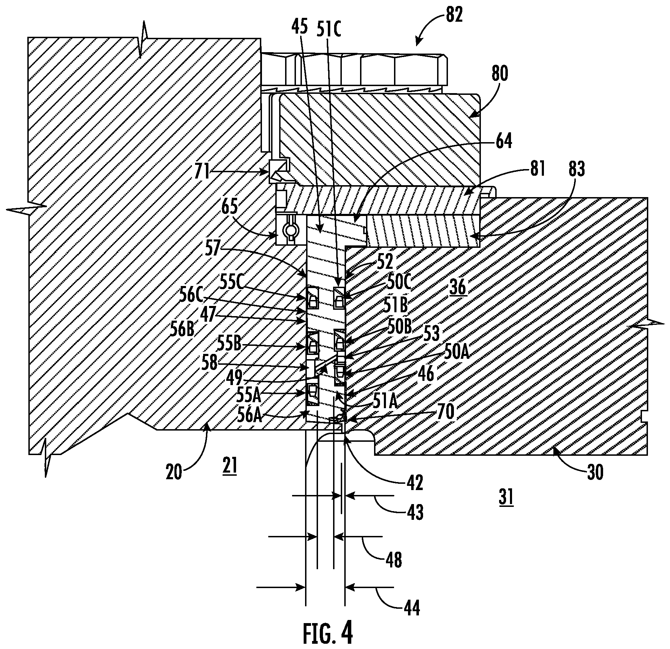

With reference now to upper rotary gap 41 shown in FIG. 4, separate and removable annular seal carrier 45 is disposed in annular rotary gap 41 between inner-facing surface 35 of outer housing 30 and outer-facing surface 25 of inner housing 20. Seal carrier 45 comprises outer-facing carrier surface 46 generally opposed to inner-facing surface 35 of outer housing 30 across radial annular outer carrier gap 52 and inner-facing carrier surface 47 generally opposed to outer-facing surface 25 of inner housing 20 across radial annular inner carrier gap 57. As shown in FIG. 4, seal carrier 45 has maximum radial width 44 from outer gap 52 to inner gap 57 that is greater than maximum radial width 43 of annular throat gap 42 and carrier 45 is positioned in upper gap 41 such that narrowed throat 42 of upper rotary gap 41 is located in the fluid path between fluid exchange chamber 40 and the bottom of seal carrier 45. As shown in FIG. 4, in this embodiment seal carrier 45 has minimum radial width 48 from outer gap 52 to inner gap 57 that is also greater than maximum radial width 43 of annular throat gap 42. Thus, annular seal carrier 45 is disposed in annular rotary gap 41 above throat 42 between inner-facing surface 35 of outer housing 30 and outer-facing surface 25 of inner housing 20, with outer-facing carrier surface 46 of seal carrier 45 opposed to inner-facing surface 35 of outer housing 30 across outer static gap 52 and inner-facing carrier surface 47 of seal carrier 45 opposed to outer-facing surface 25 of inner housing 20 across inner dynamic rotary gap 57.

In this embodiment, outer-facing carrier surface 46 of seal carrier 45 includes three outer axially-spaced annular grooves or seal glands 51A, 51B and 51C that receive and support three outer annular static seals 50A, 50B and 50C in outer static gap 52 between outer-facing carrier surface 46 of carrier 45 and inner-facing surface 35 of outer housing 30. Inner-facing carrier surface 47 of carrier 45 includes three inner axially-spaced annular grooves or seal glands 56A, 56B and 56C that receive and support three inner annular dynamic seals 55A, 55B and 55C in inner dynamic rotary gap 57 between inner-facing carrier surface 47 of carrier 45 and outer-facing surface 25 of inner housing 20. In this embodiment, the number of annular outer seals is equal to the number of annular inner seals. Carrier 45 with seals 50A, 50B, 50C, 55A, 55B and 55C is thereby located in gap 41 between stationary inner housing 20 and rotating outer housing 30 to contain fluids within annular chamber 40 therebetween and prevent fluid from leaking past the two radially opposed surfaces 25 and 35 when high pressure fluid is present in annular chamber 40.

In this embodiment, outer-facing carrier surface 46 of seal carrier 45 has an operative outer pressure sensitive surface area that extends from the bottom or heal of seal 50C to the top of narrowed throat 42 and inner-facing carrier surface 47 of seal carrier 45 has an operative inner pressure sensitive surface area that extends from the bottom or heal of seal 55C to the top of narrowed throat 42. Such inner pressure sensitive surface area and outer pressure sensitive surface area are pressure balanced. As shown, to aid in the pressure balance between the inside and outside of carrier 45, outer-facing carrier surface 46 of seal carrier 45 includes annular outer fluid groove or chamber 53 formed into outer-facing carrier surface 46 of seal carrier 45 radially between seal carrier 45 and inner-facing surface 35 of outer housing 30 and axially between seal 50A and seal 50B. Similarly, inner-facing carrier surface 47 of seal carrier 45 includes annular inner fluid groove or chamber 58 formed into inner-facing carrier surface 47 of seal carrier 45 radially between seal carrier 45 and outer-facing surface 25 of inner housing 20 and axially between seal 55A and seal 55B. As shown, fluid passage 49 is provided in carrier 45 between outer pressure fluid chamber 53 and inner pressure fluid chamber 58. With this hydraulic circuit in carrier 45, carrier 45 may be operative configured such that a separate balancing fluid is provided at a high pressure to chambers 53 and 58 and passage 49 communicating therebetween such that outer and inner fluid chambers 53 and 58 are pressure balanced. With radial annular outer carrier gap 52 between seal carrier 45 and outer housing 30 and radial annular inner carrier gap 57 between seal carrier 45 and inner housing 20 being in limited fluid communication with annular exchange chamber 40 at an operative pressure, and with separate chambers 53 and 58 being independently pressurized at a greater operative pressure to the pressure in exchange chamber 40, carrier 45 can thereby radially float between inner housing 20 and outer housing 30. In this floating and balanced arrangement, outer static seals 50A, 50B and 50C and inner dynamic seals 55A, 55B and 55C of seal carrier 45 seal leakage of high pressure fluid out of annular exchange chamber 40 up through throat 42 and rotary interface gap 41 between inner housing 20 and outer housing 30.

In this embodiment, filter 70 is disposed in annular radial gap 41 between annular fluid chamber 40 and seal carrier 45 to protect seals 50A, 50B and 50C and 55A, 55B and 55C from fluid contaminates, such as abrasive particles. In this embodiment, filter 70 is a porous seal filter that allows fluid to flow through it to fill the cavities that exist between the housings and the seals as the swivel fills but prevents contamination from reaching the pressure contained seals. Once the cavities are filled there is no additional flow through seal filter 70. In addition, throat gap portion 42 of rotary gap 41 may comprise an annular bend between fluid exchange chamber 40 and seal carrier 45. The seal filters may be made from filled PTFE for wear resistance and porosity may be created by sintering the PTFE without external pressure. Various alternative filter types and shapes to those shown may be used as alternatives.

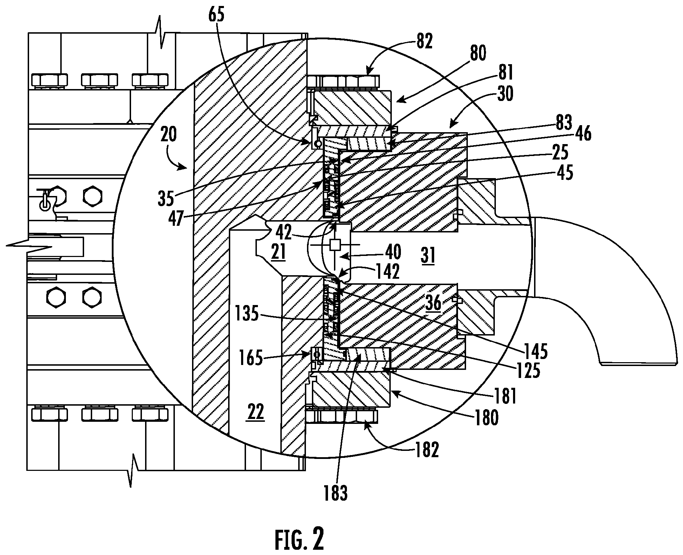

As shown in FIGS. 2 and 4, flange head 64 of seal carrier 45 is positioned radially between drive ring 83 of outer housing 30 to the outside and annular rotary bearing 65 to the inside. Drive ring 83 is positioned radially between outer housing body 36 of outer housing 30 to the outside and seal carrier head 64 to the inside. Bearing 65 is positioned between carrier head 64 to the outside and inner housing 20 to the inside and facilitates rotation of carrier 45 about inner housing 20. V-ring 71 is disposed axially above bearing 65 and upper cover plate 81 to direct fluids and fluid contaminates, such as abrasive particles, away from rotary gap 41.

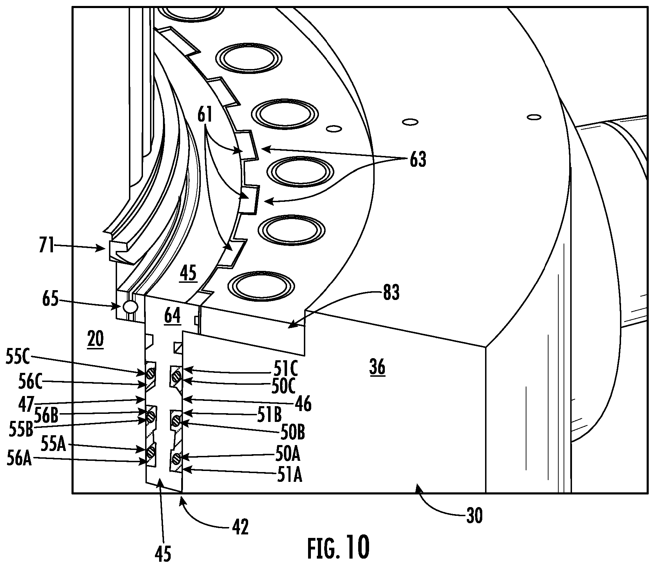

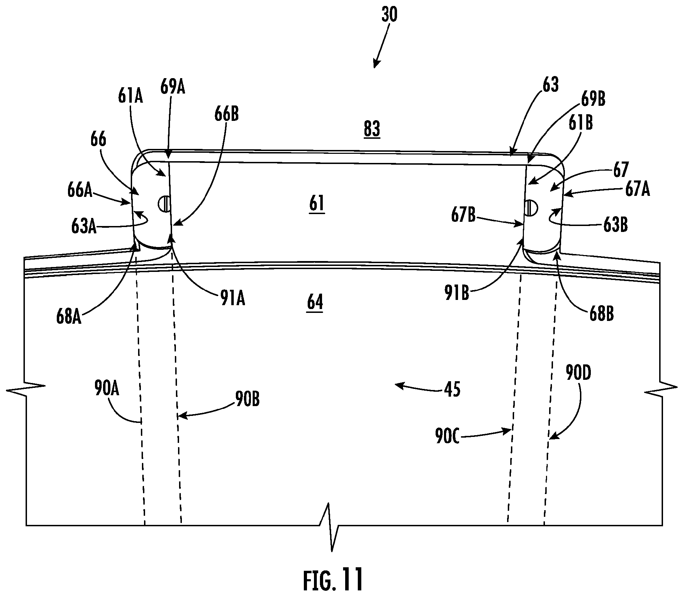

As shown in FIG. 10, flange head 64 of seal carrier 45 includes a plurality of radially and outwardly-extending and circumferential-spaced splines or teeth 61 that mesh with corresponding inwardly-extending and circumferential-spaced recesses 63 in drive ring 83 mounted to outer housing 30 such that seal carrier 45 rotates about center axis x-x with rotation of outer housing 30 about center axis x-x relative to inner housing 20. As shown in FIG. 11, in this embodiment, teeth 61 include anti-backlash slides or wear pads 66 and 67 that interface with corresponding pockets 63 of splined drive ring 83 mounted to outer housing 30. Rightwardly-facing surface 66B of wear pad 66 is bonded to leftwardly-facing surface 61A of tooth 61 by an epoxy layer 91A that is applied at interface 69A so as to also position wear surface 66A of wear pad 66 against opposed rotational bearing surface 63A of drive ring 83 at interface 68A. Similarly, leftwardly-facing surface 67B of wear pad 67 is bonded to rightwardly-facing surface 61B of tooth 61 by an epoxy layer 91B that is applied into interface 69B so as to also position wear surface 67A of wear pad 67 against opposed rotational bearing surface 63B of drive ring 83 at interface 68B. In addition, in this embodiment opposed rotational bearing surfaces 63A of drive ring 83 and 66A of wear pad 66 are each orientated on radial plane 90A extending from center axis x-x, opposed bonded surfaces 66B of wear pad 66 and 61A of tooth 61 are each orientated on radial plane 90B extending from center axis x-x, opposed bonded surfaces 67B of wear pad 67 and 61B of tooth 61 are each orientated on radial plane 90C extending from center axis x-x, and opposed rotational bearing surfaces 63B of drive ring 83 and 67A of wear pad 67 are each orientated on radial plane 90D extending from center axis x-x. With the radial alignment of drive ring rotational interfaces 68A and 68B and wear pads 66 and 67 on each radially-extending side of each of teeth 61, backlash is reduced in both rotational directions about axis x-x as the radial alignment of the teeth allows radial expansion without creating enlarged space and backlash between the teeth. The radially aligned splined interface and anti-backlash components fix seal carrier 45 rotationally to outer housing 30 while allowing the outer housing 30 components to stretch radially under pressure with minimal impact on seal carrier 45.

In this embodiment, because seal carrier 45 is rotationally coupled to outer housing 30 via splined drive ring 83, outer seals 50A, 50B and 50C operate as static seals across static gap 52 and inner seals 55A, 55B and 55C operate as dynamic seals across rotary gap 57 at the rotational interface between inner housing 20 and outer housing 30. This splined connection also maintains concentricity between the inner and outer components.

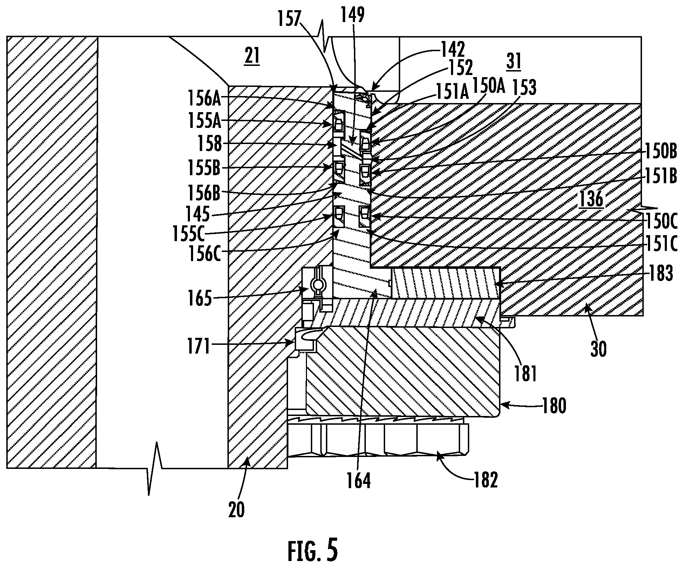

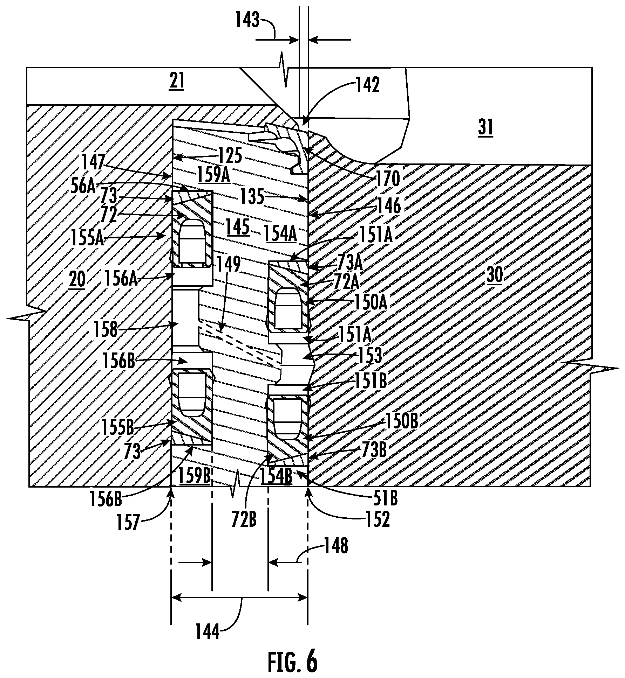

A similar seal carrier 145 and sealing arrangement is employed below annular exchange chamber 40 to seal leakage of high pressure fluid out of annular exchange chamber 40 through rotary interface gap 141 between inner housing 20 and outer housing 30. In particular, and with reference now to lower rotary gap 141 shown in FIGS. 5 and 6, separate and removable annular seal carrier 145 is disposed in annular rotary gap 141 between inner-facing surface 135 of outer housing 30 and outer-facing surface 125 of inner housing 20. Seal carrier 145 comprises outer-facing carrier surface 146 generally opposed to inner-facing surface 135 of outer housing 30 across radial annular outer carrier gap 152 and inner-facing carrier surface 147 generally opposed to outer-facing surface 125 of inner housing 20 across radial annular inner carrier gap 157. As shown in FIG. 6, seal carrier 145 has maximum radial width 144 from outer gap 152 to inner gap 157 that is greater than maximum radial width 143 of annular throat gap 142 and carrier 145 is positioned in lower gap 141 such that narrowed throat 142 of lower rotary gap 141 is located in the fluid path between fluid exchange chamber 40 and the top of seal carrier 145. As shown in FIG. 6, in this embodiment seal carrier 145 has minimum radial width 148 from outer gap 152 to inner gap 157 that is also greater than maximum radial width 143 of annular throat gap 142. Thus, annular seal carrier 145 is disposed in annular rotary gap 141 below throat 142 between inner-facing surface 135 of outer housing 30 and outer-facing surface 125 of inner housing 20, with outer-facing carrier surface 146 of seal carrier 145 opposed to inner-facing surface 135 of outer housing 30 across outer static gap 152 and inner-facing carrier surface 147 of seal carrier 145 opposed to outer-facing surface 125 of inner housing 20 across inner dynamic rotary gap 157.

In this embodiment, outer-facing carrier surface 146 of seal carrier 145 includes three outer axially-spaced annular grooves or seal glands 151A, 151B and 151C that receive and support three outer annular static seals 150A, 150B and 150C in outer static gap 152 between outer-facing carrier surface 146 of carrier 145 and inner-facing surface 135 of outer housing 30. Inner-facing carrier surface 147 of carrier 145 includes three inner axially-spaced annular grooves or seal glands 156A, 156B and 156C that receive and support three inner annular dynamic seals 155A, 155B and 155C in inner dynamic rotary gap 157 between inner-facing carrier surface 147 of carrier 145 and outer-facing surface 125 of inner housing 20. In this embodiment, the number of annular outer seals is equal to the number of annular inner seals. Carrier 145 with seals 150A, 150B, 150C, 155A, 155B and 155C is thereby located in gap 141 between stationary inner housing 20 and rotating outer housing 30 to contain fluids within annular chamber 40 therebetween and prevent fluid from leaking past the two radially opposed surfaces 125 and 135 when high pressure fluid is present in annular chamber 40.

In this embodiment, outer-facing carrier surface 146 of seal carrier 145 has an operative outer pressure sensitive surface area that extends from the top or heal of seal 150C to the bottom of narrowed throat 142 and inner-facing carrier surface 147 of seal carrier 145 has an operative inner pressure sensitive surface area that extends from the top or heal of seal 155C to the bottom of narrowed throat 142. Such inner pressure sensitive surface area and outer pressure sensitive surface area are pressure balanced. As shown, to aid in the pressure balance between the inside and outside of carrier 145, outer-facing carrier surface 146 of seal carrier 145 includes annular outer fluid groove or chamber 153 formed into outer-facing carrier surface 146 of seal carrier 145 radially between seal carrier 145 and inner-facing surface 135 of outer housing 30 and axially between seal 150A and seal 150B. Similarly, inner-facing carrier surface 147 of seal carrier 145 includes annular inner fluid groove or chamber 158 formed into inner-facing carrier surface 147 of seal carrier 145 radially between seal carrier 145 and outer-facing surface 125 of inner housing 20 and axially between seal 155A and seal 155B. As shown, fluid passage 149 is provided in carrier 145 between outer pressure fluid chamber 153 and inner pressure fluid chamber 158. With this hydraulic circuit in carrier 145, carrier 145 may be operative configured such that a separate balancing fluid is provided at a high pressure to chambers 153 and 158 and passage 149 communicating therebetween such that outer and inner fluid chambers 153 and 158 are pressure balanced. With radial annular outer carrier gap 152 between seal carrier 145 and outer housing 30 and radial annular inner carrier gap 157 between seal carrier 145 and inner housing 20 being in limited fluid communication with annular exchange chamber 40 at an operative pressure, and with separate chambers 153 and 158 being independently pressurized at a greater operative pressure to the pressure in exchange chamber 40, carrier 145 can thereby radially float between inner housing 20 and outer housing 30. In this floating and balanced arrangement, outer static seals 150A, 150B and 150C and inner dynamic seals 155A, 155B and 155C of seal carrier 145 seal leakage of high pressure fluid out of annular exchange chamber 40 down through throat 142 and rotary interface gap 141 between inner housing 20 and outer housing 30.

In this embodiment, filter 170 is disposed in annular radial gap 141 between annular fluid chamber 40 and seal carrier 145 to protect seals 150A, 150B and 150C and 155A, 155B and 155C from fluid contaminates, such as abrasive particles. In this embodiment, filter 170 is a seal filter that allows fluid to flow through it to fill the cavities that exist between the housings and the seals as the swivel fills but prevents contamination from reaching the pressure contained seals. Once the cavities are filled there is no additional flow through seal filter 170. In addition, throat gap portion 142 of rotary gap 141 may comprise an annular bend between fluid exchange chamber 40 and seal carrier 145.

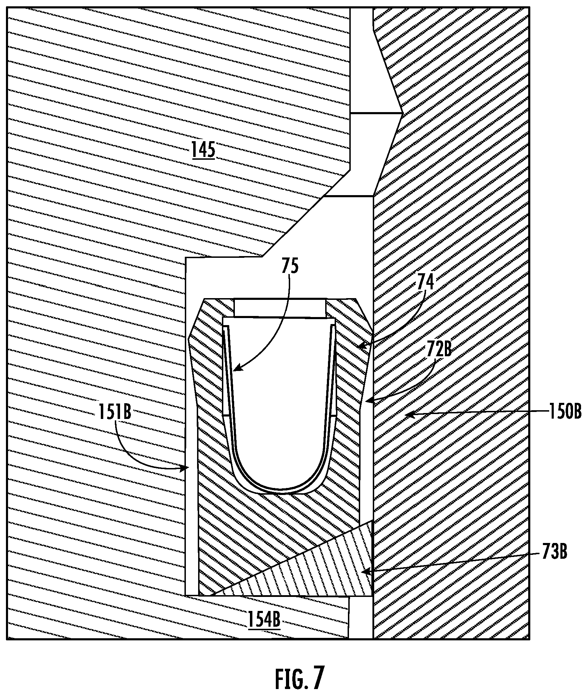

Each of seals 50A, 50B, 50C, 150A, 150B, 150C, 55A, 55B, 55C, 155A, 155B, and 155C comprise an annular primary seal and a stiffer or more rigid annular back-up ring disposed in each of annular gland 51A, 51B, 51C, 151A, 151B, 151C, 56A, 56B, 56C, 156A, 156B, and 156C of the gland body (for example gland body 154A, 154B, 159A and 159B of seal carrier 145 shown in FIG. 6) of seal carriers 45 and 145, respectively. With reference to FIG. 7 and carrier seal 150B as an example, seal 150B comprises annular primary seal 72B and annular back-up ring 73B disposed in outer annular gland 151B of gland body 154B of seal carrier 145. As shown, annular primary seal 72B comprise elastomeric seal jacket 74 and seal spring energizer 75. In this embodiment, back-up ring 73B is metallic and provides additional extrusion resistance to the high pressures acting on the seal. In this embodiment, back-up ring 73B is cut, formed or machined-in-place from gland body 154B of seal carrier 145. Thus, because back-up ring 73B is cut or formed from gland body 154B of seal carrier 145, back-up ring 73B has a material composition that is the same as the material composition of gland body 154B of seal carrier 145. At least the other outer static seals 50A, 50B, 50C, 150A, and 150C may have similar back-up rings formed in the same manner from their respective carrier gland bodies and in some embodiments all of the seals may have similar back-up rings formed in the same manner from their respective carrier gland bodies.

As shown in FIGS. 2 and 5, flange head 164 of seal carrier 145 is positioned radially between drive ring 183 of outer housing 30 to the outside and annular rotary bearing 165 to the inside. Drive ring 183 is positioned radially between outer housing body 136 of outer housing 30 to the outside and seal carrier head 164 to the inside. Bearing 165 is positioned between carrier head 164 to the outside and inner housing 20 to the inside and facilitates rotation of carrier 145 about inner housing 20. V-ring 171 is disposed axially below bearing 165 and lower cover plate 181 to direct fluids and fluid contaminates, such as abrasive particles, away from rotary gap 141.

As with flange head 64 of seal carrier 45, flange head 164 of seal carrier 145 includes a plurality of radially and outwardly-extending and circumferential-spaced splines or teeth that mesh with corresponding inwardly-extending and circumferential-spaced recesses in drive ring 183 mounted to outer housing 30 such that seal carrier 145 rotates about center axis x-x with rotation of outer housing 30 about center axis x-x relative to inner housing 20. As with flange head 64 of seal carrier 45, in this embodiment the teeth of flange head 164 include anti-backlash slides or wear pads that interface on radial aligned planes from center axis x-x with corresponding pockets of splined drive ring 183 mounted to outer housing 30. With such wear pads on each radially-extending side of each of the teeth, backlash is reduced in both rotational directions about center axis x-x.

In this embodiment, because seal carrier 145 is rotationally coupled to outer housing 30 via splined drive ring 183, outer seals 150A, 150B and 150C operate as static seals across static gap 152 and inner seals 155A, 155B and 155C operate as dynamic seals across rotary gap 157 at the rotational interface between inner housing 20 and outer housing 30. This splined connection also maintains concentricity between the inner and outer components.

As shown in FIGS, 1, 2 and 10, outer housing 30 includes annular upper support plate 80, annular upper cover plate 81, and annular upper drive ring 83 that are operatively configured to retain seal carrier 45 axially and rotationally relative to outer housing 30 but also allow access to seal carrier 45 without entirely disassembling process swivel 15. With such access, seal carrier 45 can be easily removed and replaced or serviced, including by replacing one or more of seals 50A, 50B, 50C, 55A, 55B or 55C.

Annular support plate 80 is formed from a plurality of separately removable arcuate segments, partially shown at 80A, 80B and 80C, that are each removably attached via bolts 82 to body portion 36 of outer housing 30, such that the segments may be detached and reattached from body portion 36 of outer housing 30 with a drive tool to provide access to seal carrier 45 and provide enough axial clearance between adjacent swivel outer housing components to move annular cover plate 81 and extract seal carrier 45 and replace seals if needed. While in this embodiment annular support plate 80 is formed from twelve arcuate segments, the support plate may be formed from a different number of segments or otherwise segmented in different ways so as to provide access to seal carrier 45.

The annular flange portion of carrier head 64 of seal carrier 45 is operatively retained axially between body portion 36 of outer housing 30 and annular support plate 80 of outer housing 30. Annular cover plate 81 is placed axially between annular support plate 80 of outer housing 30 and seal carrier 45 and retains axial alignment of annular bearing 65 between seal carrier 45 and inner housing 20.

As shown in FIGS, 1, 2, 8 and 9, outer housing 30 also includes annular lower support plate 180, annular lower cover plate 181, and annular lower drive ring 183 that are operatively configured to retain seal carrier 145 axially and rotationally relative to outer housing 30 but also allow access to seal carrier 145 without entirely disassembling process swivel 15. With such access, seal carrier 145 can also be easily removed and replaced or serviced, including by replacing one or more of seals 150A, 150B, 150C, 155A, 155B or 155C.

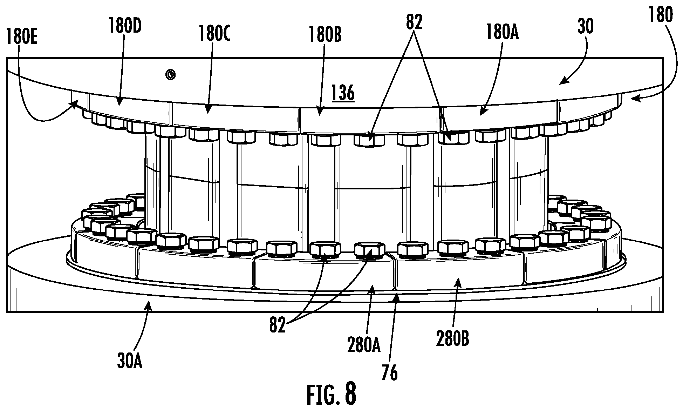

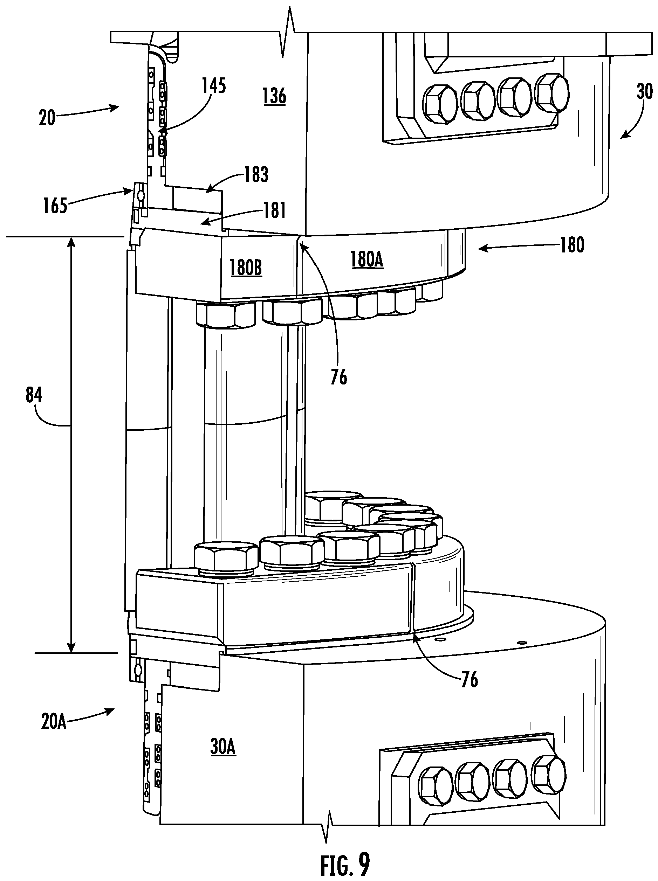

Annular support plate 180 is also formed from a plurality of separately removable arcuate segments, partially shown at 180, 180A, 180B, 180C, 180D and 180E, that are each removably attached via bolts 82 to body portion 136 of outer housing 30 with a drive tool, such that the segments may be detached and reattached from body portion 136 of outer housing 30 with a drive tool to provide access to seal carrier 145 and provide enough axial clearance 84 between adjacent swivel outer housing components 30 and 30A, for example, to move annular cover plate 181 and extract seal carrier 145 and replace seals if needed. While in this embodiment annular support plate 180 is formed from twelve arcuate segments, the support plate may be formed from a different number of segments or otherwise segmented in different ways so as to provide access to seal carrier 145. The radially extending bottom edges of adjacent segments of a support plate, for example segments 280A and 280B shown in FIG. 8, may provide radially extending drainage passages or channels, for example channel 76 shown in FIGS. 8 and 9, to assist in directing fluids and fluid contaminates, such as abrasive particles, away from the rotary gap.

The annular flange portion of carrier head 164 of seal carrier 45 is operatively retained axially between body portion 136 of outer housing 30 and annular support plate 180 of outer housing 30. Annular cover plate 181 is placed axially between annular support plate 180 of outer housing 30 and seal carrier 145 and retains axial alignment of annular bearing 165 between seal carrier 415 and inner housing 20.

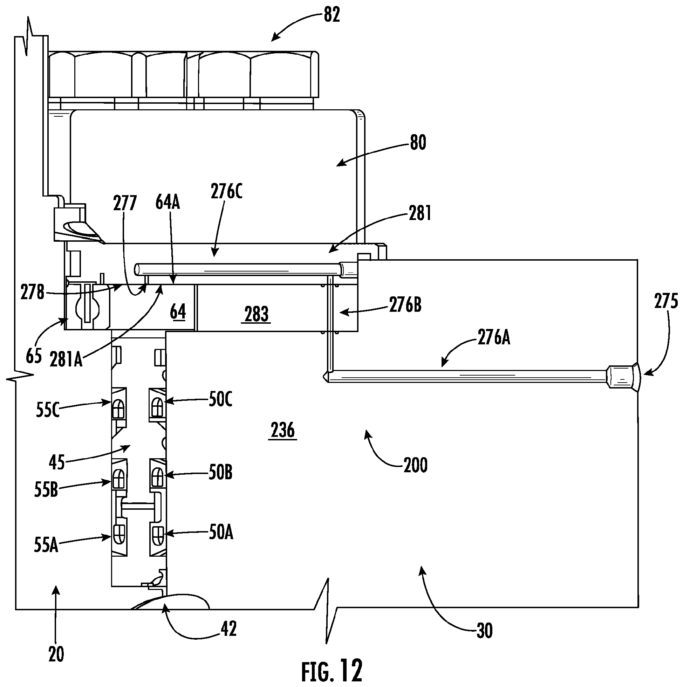

An axial pressure balancing alternative embodiment 200 of the upper rotary interface seal system of FIG. 4 is shown in FIG. 12. As shown in FIG. 12, this embodiment also includes seal carrier 45 supporting outer static seals 50A, 50B and 50C and inner dynamic seals 55A, 55B and 55C, together with segmented annular support plate 80, annular cover plate 281 and annular drive ring 283 that are operatively configured to retain seal carrier 45 axially and rotationally relative to outer housing 30 but also allow access to seal carrier 45 without entirely disassembling process swivel 15. Flange head 64 of seal carrier 45 is also positioned radially between drive ring 283 of outer housing 30 to the outside and annular lubricated rotary bearing 65 to the inside, with drive ring 283 positioned radially between outer housing body 236 of outer housing 30 to the outside and seal carrier head 64 to the inside and lubricated bearing 65 positioned between carrier head 64 to the outside and inner housing 20 to the inside to facilitate rotation of carrier 45 about inner housing 20. However, to aid in the axial pressure balance between the top and bottom of seal carrier 45, cover plate 281 includes annular fluid port 277 that ports fluid into the slight annular axial gap 278 between bottom-facing annular surface 281A of cover 281 and upper-facing annular surface 64A of carrier head 64 of carrier 45. Pressure port 277 is supplied via inlet port 275 in outer housing body 236 and fluid passages 276A, 276B and 276C in outer housing body 236, drive ring 283 and cover plate 281, respectively. With hydraulic system 200, carrier 45 may be operatively configured such that a separate axial balancing fluid is provided at a high pressure to gap 278 to provide axial pressure balance or an axial counter load to the opposed process fluid pressure acting axially on seal carrier 45 from fluids below seals 50C and 55C and to lubricate and reduce friction at interface 278 between head 64 of seal carrier 45 and cover plate 281. Such introduced fluid is also provided to lubricate bearing 65, which is in fluid communication with gap 278 as shown. With no seal between fluid port 277 and bearing 65, hydraulic system 200 circulates the lubricating fluid through bearing 65.

When high pressure fluid is present in annular chamber 40, such pressure acts to radially separate inner housing 20 and outer housing 30 from each other. Separation thereby may occur between the radially opposed surfaces 25 and 35 of the inner and outer housings 20 and 30, respectively, adjacent annular chamber 40 in which seals are supported, including opposed grooves or glands in which the seals may be seated. Such seal grooves and the radial gap clearances might tend to widen as the fluid pressure increases, which might otherwise lead to the allowable gap size of the seals being exceeded and consequently result in extrusion or cracking of the seal.

Floating seal carriers 45 and 145 and narrowed throat gaps 42 and 142 between carriers 45 and 145 and annular exchange chamber 40, respectively, provide a number of advantages that address the allowable gap size of the seals being exceeded. For example, seal carriers 45 and 145 are pressure balanced and radially float between inner housing 20 and outer housing 30 to isolate rotationally dynamic movements, which dynamic pressure seals 55A, 55B and 55C and 155A, 155B and 155C must resist, from radial stretching movement, which is resisted by separate seals 50A, 50B and 50C and 150A, 150B and 150C, respectively. Floating pressure balanced seal carriers 45 and 145 limit clamping or expanding forces acting on seal carriers 45 and 145 from surrounding fluids while maintaining clearances or radial gaps 41 and 141 at tolerable sizes to allow rotation of outer housing 30 relative to inner housing 20 and also control seal extrusion. The pressure balancing of seal carriers 45 and 145 achieves a balance in which the carriers deflect little from their unpressurized state while the outer components stretch away from it. The resulting extrusion gap 57, 157 between the inner components 20 and seal carriers 45 and 145, which the rotationally dynamic seals 55A, 55B and 55C and 155A, 155B and 155C must bridge, stays within acceptable limits. The proposed design also protects the seal from fluid contaminates, such as abrasive particles, by the use of seal filters 70 and 170 and the location of seal carriers 45 and 145 above and below narrowed gaps 42 and 142 directly between inner housing 20 and outer housing 30 immediately adjacent exchange chamber 40, respectively. These gaps are contoured and/or labyrinthian so as to remove a direct fluid path between chamber 40 and seals 50A, 50B, 50C, 55A, 55B, 55C, 150A, 150B, 150C, 155A, 155B and 155C, making it more difficult for fluid contaminates to migrate to the seals. The splined connections 61/63 between seal carriers 45 and 145 and the outer components 30 helps maintain concentricity between the inner and outer components as they deform under pressure. The anti-backlash components 63 help couple seal carriers 45 and 145 to the outer components 30 while allowing the outer components 30 to stretch radially with little impact on the independent seal carriers 45 and 145. They improve machinability by reducing the required tolerances, improve the sliding contact interface, and allow improved fit between the spline teeth 61. Finally, seal carriers 45 and 145 allow easy change out of the seals because seal carriers 45 and 145 can be extracted from the assembly without having to fully disassemble swivel 15.

## Claims

1. A rotary interface comprising:
an inner housing (20);
at least one outer housing (30) rotatably supported on the inner housing so that the outer housing is free to rotate about a center axis relative to the inner housing at a rotary interface between the inner housing and the outer housing;
an annular fluid exchange chamber (40) formed at the rotary interface between the outer housing and the inner housing;
an inner fluid port (21) in the inner housing communicating with the fluid exchange chamber;
an outer fluid port (31) in the outer housing communicating with the fluid exchange chamber;
the rotary interface comprising an annular rotary gap (41, 141) between an inner-facing surface (35, 135) of the outer housing and an outer-facing surface (25, 125) of the inner housing;
the rotary gap extending in an axial direction from the fluid exchange chamber;
an annular seal carrier (45, 145) disposed in the rotary gap between the inner-facing surface of the outer housing and the outer-facing surface of the inner housing;
the seal carrier comprising an outer-facing carrier surface (46, 146) opposed to the inner-facing surface of the outer housing and an inner-facing carrier surface (47, 147) opposed to the outer-facing surface of the inner housing;
at least an annular first outer seal (50A, 50B, 50C, 150A, 150B, 150C) disposed in an outer carrier gap (52, 152) between the outer-facing carrier surface of the seal carrier and the inner-facing surface of the outer housing;
at least an annular first inner seal (55A, 55B, 55C, 155A, 155B, 155C) disposed in an inner carrier gap (57, 157) between the inner-facing carrier surface of the seal carrier and the outer-facing surface of the inner housing;
the seal carrier having a maximum radial width (44, 144) from the outer carrier gap to the inner carrier gap;
the rotary gap comprising an annular throat gap portion (42, 142) having a maximum radial width (43, 143) between the inner-facing surface of the outer housing and the outer-facing surface of the inner housing;
the throat gap portion of the rotary gap disposed between the fluid exchange chamber and the seal carrier; and
the maximum radial width of the throat gap portion of the rotary gap being less than the maximum radial width of the seal carrier.

2. The rotary interface set forth in claim 1, comprising a filter (70, 170) disposed in the rotary gap between the fluid exchange chamber and the seal carrier; and optionally wherein the filter comprises an annular porous seal filter disposed in the rotary gap between the throat gap portion of the rotary gap and the seal carrier and configured to protect the first inner and outer seals from fluid contaminates.

3. The rotary interface set forth in claim 1, comprising an annular second outer seal (50B, 150B) disposed in the outer carrier gap between the outer-facing carrier surface of the seal carrier and the inner-facing surface of the outer housing, and an annular second inner seal (55B, 155B) disposed in the inner carrier gap between the inner-facing carrier surface of the seal carrier and the outer-facing surface of the inner housing.

4. The rotary interface set forth in claim 3, comprising:
an annular outer fluid chamber (53, 153) formed in the outer carrier gap radially between the outer-facing carrier surface of the seal carrier and the inner-facing surface of the outer housing and axially between the first outer seal and the second outer seal;
an annular inner fluid chamber (58, 158) formed in the inner carrier gap radially between the inner-facing carrier surface of the seal carrier and the outer-facing surface of the inner housing and axially between the first inner seal and the second inner seal;
a pressurized balancing fluid in the outer fluid chamber;
a pressurized balancing fluid in the inner fluid chamber; and
wherein the outer and inner fluid chambers are pressure balanced;
and optionally comprising a fluid passage (49, 149) in the carrier between the outer fluid chamber and the inner fluid chamber and wherein the pressurized balancing fluid in the outer fluid chamber communicates with the pressurized balancing fluid in the inner fluid chamber.

5. The rotary interface set forth in claim 1, comprising:
a first number of annular outer seals disposed in the outer carrier gap between the outer-facing carrier surface of the seal carrier and the inner-facing surface of the outer housing;
a second number of annular inner seals disposed in the inner carrier gap between the inner-facing carrier surface of the seal carrier and the outer-facing surface of the inner housing; and
the first number of annular outer seals being equal to the second number of annular inner seals.

6. The rotary interface set forth in claim 1, wherein the first outer seal comprises an annular primary seal (72A, 72B) and an annular back-up ring (73A, 73B) disposed in an outer annular gland (151A, 151B) of a gland body (154A, 154B) of the seal carrier;
and optionally wherein the back-up ring is formed from the gland body of the seal carrier;
and optionally wherein the back-up ring comprises a ring material composition, the gland body of the seal carrier comprises a body material composition, and the ring material composition is the same as the body material composition;
and optionally wherein the primary seal comprises a seal jacket (74) and a seal spring energizer (75).

7. The rotary interface set forth in claim 1, wherein the seal carrier is rotationally coupled to the outer housing such that the seal carrier rotates about the center axis relative to the inner housing with rotation of the outer housing about the center axis relative to the inner housing; and optionally comprising a rotary bearing between the seal carrier and the inner housing.

8. The rotary interface set forth in claim 7, wherein:
the seal carrier comprises a plurality of outwardly-facing teeth (61) in meshed engagement with a corresponding plurality of inwardly-facing grooves (63) of the outer housing such that the seal carrier rotates with rotation of the outer housing relative to the inner housing; and
the seal carrier comprises an anti-backlash interface (66, 67) between each of the plurality of outwardly-facing teeth of the seal carrier and the corresponding plurality of inwardly-facing grooves of the outer housing.

9. The rotary interface set forth in claim 1, wherein:
the outer housing comprises an annular support plate (80, 180) operatively configured to retain the seal carrier axially relative to the outer housing; and
the annular support plate comprises a plurality of separate segments (80A, 80B, 80C, 180A, 180B 180C) removably attached to a body portion (36, 136) of the outer housing;
whereby the arcuate segments may be detached from the body portion of the outer housing to provide access to the seal carrier.

10. The rotary interface set forth in claim 9, wherein the seal carrier comprises an annular flange portion (64, 164) operatively retained axially between the body portion of the outer housing and the annular support plate of the outer housing;
and optionally wherein the outer housing comprises an annular cover plate (81, 181) disposed axially between the annular support plate of the outer housing and the seal carrier;
and optionally comprising a radially extending drainage passage between a first segment and a second segment of said plurality of separate segments of said annular support plate.

11. The rotary interface set forth in claim 1, wherein
the rotary gap comprises an upper gap (41) extending in a first axial direction from the fluid exchange chamber and a lower gap (141) extending in a second axial direction from the fluid exchange chamber;
the seal carrier (45) is disposed in the upper gap of the rotary gap between the inner-facing surface (35) of the outer housing and the outer-facing surface (25) of the inner housing;
the upper gap comprises the throat gap portion (42);
an annular second seal carrier (145) disposed in the lower gap of the rotary gap between the inner-facing surface (135) of the outer housing and the outer-facing surface (125) of the inner housing;
the second seal carrier comprises a second outer-facing carrier surface (146) opposed to the inner-facing surface of the outer housing and a second inner-facing carrier surface (147) opposed to the outer-facing surface of the inner housing;
at least an annular second outer seal (150A, 150B, 150C) disposed in a second outer carrier gap (152) between the second outer-facing carrier surface of the second seal carrier and the inner-facing surface of the outer housing;
at least an annular second inner seal (155A, 155B, 155C) disposed in a second inner carrier gap (157) between the second inner-facing carrier surface of the second seal carrier and the outer-facing surface of the inner housing;
the second seal carrier having a maximum radial width (144) from the second outer carrier gap to the second inner carrier gap;
the lower gap of the rotary gap comprising an annular second throat gap portion (142) having a maximum radial width (143) between the inner-facing surface of the outer housing and the outer-facing surface of the inner housing;
the second throat gap portion of the lower gap being disposed between the fluid exchange chamber and the second seal carrier; and
the maximum radial width of the second throat gap portion of the rotary gap being less than the maximum radial width of the second seal carrier.

12. The rotary interface set forth in claim 1, wherein the seal carrier has a minimum radial width (48) from the outer carrier gap to the inner carrier gap and the maximum radial width of the throat gap portion of the rotary gap is less than the minimum radial width of the seal carrier.

13. The rotary interface set forth in claim 1, wherein:
the outer housing comprises an annular retaining plate (281) operatively configured to retain the seal carrier axially relative to the outer housing;
the retaining plate has an annular retaining surface (281A) facing an opposed annular bearing surface (64A) of the carrier and an axial lubricating gap (278) between the retaining surface of the retaining plate and the bearing surface of the carrier; and
the outer housing having a fluid passage communicating with the axial lubricating gap and operatively configured to provide pressurized fluid to the axial lubricating gap;
and optionally comprising a rotary bearing between the seal carrier and the inner housing and the rotary bearing in fluid communication with the axial lubricating gap.

14. The rotary interface set forth in claim 8, wherein the anti-backlash interface comprises a wear pad (66, 67) between each of the plurality of outwardly-facing teeth of the seal carrier and the corresponding plurality of inwardly-facing grooves of the outer housing; and optionally wherein each wear pad is bonded (91A, 91B) to the respective corresponding plurality of outwardly-facing teeth of the seal carrier.

15. The rotary interface set forth in claim 8, wherein each of the plurality of inwardly-facing grooves of the outer housing comprises a rotational bearing surface (63A, 63B) facing an opposed wear surface (66A, 67A) of each of the corresponding plurality of outwardly-facing teeth of the seal carrier and wherein each of the rotational bearing surfaces of the plurality of inwardly-facing grooves of the outer housing is orientated on a respective imaginary plane (90A, 90D) extending radially from the center axis; and optionally wherein the opposed wear surface of each of the corresponding plurality of outwardly-facing teeth of the seal carrier is orientated on a respective imaginary plane (90A, 90B) extending radially from the center axis.

## Patentansprüche

1. Drehschnittstelle, umfassend:
ein inneres Gehäuse (20);
mindestens ein äußeres Gehäuse (30), das drehbar an dem inneren Gehäuse gelagert ist, sodass sich das äußere Gehäuse an einer Drehschnittstelle zwischen dem inneren Gehäuse und dem äußeren Gehäuse frei um eine Mittelachse relativ zu dem inneren Gehäuse drehen kann;
eine ringförmige Fluidaustauschkammer (40), die an der Drehschnittstelle zwischen dem äußeren Gehäuse und dem inneren Gehäuse ausgebildet ist;
einen inneren Fluidanschluss (21) in dem inneren Gehäuse, der mit der Fluidaustauschkammer in Verbindung steht;
einen äußeren Fluidanschluss (31) in dem äußeren Gehäuse, der mit der Fluidaustauschkammer in Verbindung steht;
die Drehschnittstelle, umfassend einen ringförmigen Drehspalt (41, 141) zwischen einer nach innen weisenden Oberfläche (35, 135) des äußeren Gehäuses und einer nach außen weisenden Oberfläche (25, 125) des inneren Gehäuses;
den Drehspalt, der sich in axialer Richtung von der Fluidaustauschkammer erstreckt;
einen ringförmiger Dichtungsträger (45, 145), der in dem Drehspalt zwischen der nach innen weisenden Oberfläche des äußeren Gehäuses und der nach außen weisenden Oberfläche des inneren Gehäuses angeordnet ist;
wobei der Dichtungsträger eine nach außen weisende Trägeroberfläche (46, 146), die der nach innen weisenden Oberfläche des äußeren Gehäuses gegenüberliegt, und eine nach innen weisende Trägeroberfläche (47, 147), die der nach außen weisenden Oberfläche des inneren Gehäuses gegenüberliegt, umfasst;
mindestens eine ringförmige erste äußere Dichtung (50A, 50B, 50C, 150A, 150B, 150C), die in einem äußeren Trägerspalt (52, 152) zwischen der nach außen weisenden Trägeroberfläche des Dichtungsträgers und der nach innen weisenden Oberfläche des äußeren Gehäuses angeordnet ist;
mindestens eine ringförmige erste innere Dichtung (55A, 55B, 55C, 155A, 155B, 155C), die in einem inneren Trägerspalt (57, 157) zwischen der nach innen weisenden Trägeroberfläche des Dichtungsträgers und der nach außen weisenden Oberfläche des inneren Gehäuses angeordnet ist;
wobei der Dichtungsträger eine maximale radiale Breite (44, 144) von dem äußeren Trägerspalt zu dem inneren Trägerspalt aufweist;
den Drehspalt, umfassend einen ringförmigen Halsspaltabschnitt (42, 142) mit einer maximalen radialen Breite (43, 143) zwischen der nach innen weisenden Oberfläche des äußeren Gehäuses und der nach außen weisenden Oberfläche des inneren Gehäuses;
den Halsspaltabschnitt des Drehspalts, der zwischen der Fluidaustauschkammer und dem Dichtungsträger angeordnet ist; und
wobei die maximale radiale Breite des Halsspaltabschnitts des Drehspalts kleiner ist als die maximale radiale Breite des Dichtungsträgers.

2. Drehschnittstelle nach Anspruch 1, umfassend einen Filter (70, 170), der in dem Drehspalt zwischen der Fluidaustauschkammer und dem Dichtungsträger angeordnet ist; und optional wobei der Filter einen ringförmigen porösen Dichtungsfilter umfasst, der in dem Drehspalt zwischen dem Halsspaltabschnitt des Drehspalts und dem Dichtungsträger angeordnet und konfiguriert ist, um die ersten inneren und äußeren Dichtungen vor Fluidverunreinigungen zu schützen.

3. Drehschnittstelle nach Anspruch 1, umfassend eine ringförmige zweite äußere Dichtung (50B, 150B), die in dem äußeren Trägerspalt zwischen der nach außen weisenden Trägeroberfläche des Dichtungsträgers und der nach innen weisenden Oberfläche des äußeren Gehäuses angeordnet ist, und eine ringförmige zweite innere Dichtung (55B, 155B), die in dem inneren Trägerspalt zwischen der nach innen weisenden Trägeroberfläche des Dichtungsträgers und der nach außen weisenden Oberfläche des inneren Gehäuses angeordnet ist.

4. Drehschnittstelle nach Anspruch 3, umfassend:
eine ringförmige äußere Fluidkammer (53, 153), die in dem äußeren Trägerspalt radial zwischen der nach außen weisenden Trägeroberfläche des Dichtungsträgers und der nach innen weisenden Oberfläche des äußeren Gehäuses und axial zwischen der ersten äußeren Dichtung und der zweiten äußeren Dichtung ausgebildet ist;
eine ringförmige innere Fluidkammer (58, 158), die in dem inneren Trägerspalt radial zwischen der nach innen weisenden Trägeroberfläche des Dichtungsträgers und der nach außen weisenden Oberfläche des inneren Gehäuses und axial zwischen der ersten inneren Dichtung und der zweiten inneren Dichtung ausgebildet ist;
ein druckbeaufschlagtes Ausgleichsfluid in der äußeren Fluidkammer;
ein druckbeaufschlagtes Ausgleichsfluid in der inneren Fluidkammer; und
wobei die äußeren und inneren Fluidkammern druckausgeglichen sind;
und optional umfassend einen Fluiddurchgang (49, 149) in dem Träger zwischen der äußeren Fluidkammer und der inneren Fluidkammer, und wobei das unter Druck stehende Ausgleichsfluid in der äußeren Fluidkammer mit dem unter Druck stehenden Ausgleichsfluid in der inneren Fluidkammer in Verbindung steht.

5. Drehschnittstelle nach Anspruch 1, umfassend:
eine erste Anzahl von ringförmigen äußeren Dichtungen, die in dem äußeren Trägerspalt zwischen der nach außen weisenden Trägeroberfläche des Dichtungsträgers und der nach innen weisenden Oberfläche des äußeren Gehäuses angeordnet sind;
eine zweite Anzahl von ringförmigen inneren Dichtungen, die in dem inneren Trägerspalt zwischen der nach innen weisenden Trägeroberfläche des Dichtungsträgers und der nach außen weisenden Oberfläche des inneren Gehäuses angeordnet sind; und
die erste Anzahl ringförmiger äußerer Dichtungen ist gleich der zweiten Anzahl ringförmiger innerer Dichtungen.

6. Drehschnittstelle nach Anspruch 1, wobei die erste äußere Dichtung eine ringförmige Primärdichtung (72A, 72B) und einen ringförmigen Stützring (73A, 73B) umfasst, die in einer äußeren ringförmigen Stopfbuchse (151A, 151B) eines Stopfbuchsenkörpers (154A, 154B) des Dichtungsträgers angeordnet sind;
und optional wobei der Stützring aus dem Stopfbuchsenkörper des Dichtungsträgers gebildet ist;
und optional wobei der Stützring eine Ringmaterialzusammensetzung umfasst, der Stopfbuchsenkörper des Dichtungsträgers eine Körpermaterialzusammensetzung umfasst und die Ringmaterialzusammensetzung die gleiche ist wie die Körpermaterialzusammensetzung;
und optional wobei die primäre Dichtung einen Dichtungsmantel (74) und ein Dichtungsfederspannelement (75) umfasst.

7. Drehschnittstelle nach Anspruch 1, wobei der Dichtungsträger mit dem äußeren Gehäuse derart drehfest gekoppelt ist, dass der Dichtungsträger mit der Drehung des äußeren Gehäuses um die Mittelachse relativ zum inneren Gehäuse um die Mittelachse relativ zum inneren Gehäuse rotiert; und optional umfassend ein Drehlager zwischen dem Dichtungsträger und dem inneren Gehäuse.

8. Drehschnittstelle nach Anspruch 7, wobei:
der Dichtungsträger eine Vielzahl von nach außen weisenden Zähnen (61) in kämmendem Eingriff mit einer entsprechenden Vielzahl von nach innen weisenden Nuten (63) des äußeren Gehäuses umfasst, derart, dass sich der Dichtungsträger mit der Drehung des äußeren Gehäuses relativ zu dem inneren Gehäuse dreht; und
der Dichtungsträger eine spielfreie Schnittstelle (66, 67) zwischen jedem der Vielzahl von nach außen weisenden Zähnen des Dichtungsträgers und der entsprechenden Vielzahl von nach innen weisenden Nuten des äußeren Gehäuses umfasst.

9. Drehschnittstelle nach Anspruch 1, wobei:
das äußere Gehäuse eine ringförmige Stützplatte (80, 180), die funktionell konfiguriert ist, um den Dichtungsträger axial relativ zu dem äußeren Gehäuse zu halten, umfasst; und
die ringförmige Stützplatte eine Vielzahl von separaten Segmenten (80A, 80B, 80C, 180A, 180B 180C) umfasst, die lösbar an einem Körperabschnitt (36, 136) des äußeren Gehäuses befestigt sind;
wodurch die bogenförmigen Segmente von dem Körperabschnitt des äußeren Gehäuses gelöst werden können, um Zugang zu dem Dichtungsträger bereitzustellen.

10. Drehschnittstelle nach Anspruch 9, wobei der Dichtungsträger einen ringförmigen Flanschabschnitt (64, 164) umfasst, der funktionell axial zwischen dem Körperabschnitt des äußeren Gehäuses und der ringförmigen Stützplatte des äußeren Gehäuses gehalten ist;
und optional wobei das äußere Gehäuse eine ringförmige Abdeckplatte (81, 181) umfasst, die axial zwischen der ringförmigen Stützplatte des äußeren Gehäuses und dem Dichtungsträger angeordnet ist;
und optional umfassend einen sich radial erstreckenden Entwässerungsdurchgang zwischen einem ersten Segment und einem zweiten Segment der Vielzahl von separaten Segmenten der ringförmigen Stützplatte.

11. Drehschnittstelle nach Anspruch 1, wobei der Drehspalt einen oberen Spalt (41), der sich in einer ersten axialen Richtung von der Fluidaustauschkammer erstreckt, und einen unteren Spalt (141), der sich in einer zweiten axialen Richtung von der Fluidaustauschkammer erstreckt, umfasst;
der Dichtungsträger (45) in dem oberen Spalt des Drehspalts zwischen der nach innen weisenden Oberfläche (35) des äußeren Gehäuses und der nach außen weisenden Oberfläche (25) des inneren Gehäuses angeordnet ist;
der obere Spalt den Halsspaltabschnitt (42) umfasst;
ein ringförmiger zweiter Dichtungsträger (145) im unteren Spalt des Drehspalts zwischen der nach innen weisenden Oberfläche (135) des äußeren Gehäuses und der nach außen weisenden Oberfläche (125) des inneren Gehäuses angeordnet ist;
der zweite Dichtungsträger eine zweite nach außen weisende Trägeroberfläche (146), die der nach innen weisenden Oberfläche des äußeren Gehäuses gegenüberliegt, und eine zweite nach innen weisende Trägeroberfläche (147) umfasst, die der nach außen weisenden Oberfläche des inneren Gehäuses gegenüberliegt;
mindestens eine ringförmige zweite äußere Dichtung (150A, 150B, 150C) in einem zweiten äußeren Trägerspalt (152) zwischen der zweiten nach außen weisenden Trägeroberfläche des zweiten Dichtungsträgers und der nach innen weisenden Oberfläche des äußeren Gehäuses angeordnet ist;
mindestens eine ringförmige zweite innere Dichtung (155A, 155B, 155C) in einem zweiten inneren Trägerspalt (157) zwischen der zweiten nach innen weisenden Trägeroberfläche des zweiten Dichtungsträgers und der nach außen weisenden Oberfläche des inneren Gehäuses angeordnet ist;
der zweite Dichtungsträger eine maximale radiale Breite (144) von dem zweiten äußeren Trägerspalt zu dem zweiten inneren Trägerspalt aufweist;
der untere Spalt des Drehspalts umfassend einen ringförmigen zweiten Halsspaltabschnitt (142) aufweisend eine maximale radiale Breite (143) zwischen der nach innen weisenden Oberfläche des äußeren Gehäuses und der nach außen weisenden Oberfläche des inneren Gehäuses;
der zweite Halsspaltabschnitt des unteren Spalts zwischen der Fluidaustauschkammer und dem zweiten Dichtungsträger angeordnet ist; und
die maximale radiale Breite des zweiten Halsspaltabschnitts des Drehspalts kleiner als die maximale radiale Breite des zweiten Dichtungsträgers ist.

12. Drehschnittstelle nach Anspruch 1, wobei der Dichtungsträger eine minimale radiale Breite (48) von dem äußeren Trägerspalt zu dem inneren Trägerspalt aufweist und die maximale radiale Breite des Halsspaltabschnitts des Drehspalts kleiner ist als die minimale radiale Breite des Dichtungsträgers.

13. Drehschnittstelle nach Anspruch 1, wobei:
das äußere Gehäuse eine ringförmige Halteplatte (281) umfasst, die funktionell konfiguriert ist, um den Dichtungsträger axial relativ zu dem äußeren Gehäuse zu halten;
die Halteplatte eine ringförmige Halteoberfläche (281A), die einer gegenüberliegenden ringförmigen Lagerfläche (64A) des Trägers zugewandt ist, und einen axialen Schmierspalt (278) zwischen der Halteoberfläche der Halteplatte und der Lagerfläche des Trägers aufweist; und
wobei das äußere Gehäuse einen Fluiddurchgang aufweist, der mit dem axialen Schmierspalt in Verbindung steht und funktionell konfiguriert ist, um dem axialen Schmierspalt Druckfluid bereitzustellen;
und optional umfassend ein Drehlager zwischen dem Dichtungsträger und dem inneren Gehäuse, wobei das Drehlager in Fluidverbindung mit dem axialen Schmierspalt steht.

14. Drehschnittstelle nach Anspruch 8, wobei die spielfreie Schnittstelle ein Verschleißpad (66, 67) zwischen jedem der Vielzahl von nach außen weisenden Zähnen des Dichtungsträgers und der entsprechenden Vielzahl von nach innen weisenden Nuten des äußeren Gehäuses umfasst; und optional wobei jedes Verschleißpad mit der jeweils entsprechenden Vielzahl von nach außen weisenden Zähnen des Dichtungsträgers verbunden (91A, 91B) ist.

15. Drehschnittstelle nach Anspruch 8, wobei jede der Vielzahl von nach innen weisenden Nuten des äußeren Gehäuses eine Rotationslagerfläche (63A, 63B) umfasst, die einer gegenüberliegenden Verschleißoberfläche (66A, 67A) jedes der entsprechenden Vielzahl von nach außen weisenden Zähnen des Dichtungsträgers zugewandt ist, und wobei jede der Rotationslagerflächen der Vielzahl von nach innen weisenden Nuten des äußeren Gehäuses auf einer jeweiligen imaginären Ebene (90A, 90D) ausgerichtet ist, die sich radial von der Mittelachse erstreckt; und optional wobei die gegenüberliegende Verschleißoberfläche jedes der entsprechenden Vielzahl von nach außen weisenden Zähnen des Dichtungsträgers auf einer jeweiligen imaginären Ebene (90A, 90B) ausgerichtet ist, die sich radial von der Mittelachse erstreckt.

## Revendications

1. Interface rotative comprenant :
un boîtier interne (20) ;
au moins un boîtier externe (30) supporté de manière rotative sur le boîtier interne de sorte que le boîtier externe est libre de tourner autour d'un axe central par rapport au boîtier interne au niveau d'une interface rotative entre le boîtier interne et le boîtier externe ;
une chambre d'échange de fluide annulaire (40) formée au niveau de l'interface rotative entre le boîtier externe et le boîtier interne ;
un orifice de fluide interne (21) dans le boîtier interne communiquant avec la chambre d'échange de fluide ;
un orifice de fluide externe (31) dans le boîtier externe communiquant avec la chambre d'échange de fluide ;
l'interface rotative comprenant un espace rotatif annulaire (41, 141) entre une surface faisant face vers l'intérieur (35, 135) du boîtier externe et une surface faisant face vers l'extérieur (25, 125) du boîtier interne ;
l'espace rotatif s'étendant dans une direction axiale à partir de la chambre d'échange de fluide ;
un support de joint d'étanchéité annulaire (45, 145) disposé dans l'espace rotatif entre la surface faisant face vers l'intérieur du boîtier externe et la surface faisant face vers l'extérieur du boîtier interne ;
le support de joint d'étanchéité comprenant une surface de support faisant face vers l'extérieur (46, 146) opposée à la surface faisant face vers l'intérieur du boîtier externe et une surface de support faisant face vers l'intérieur (47, 147) opposée à la surface faisant face vers l'extérieur du boîtier interne ;
au moins un premier joint d'étanchéité externe annulaire (50A, 50B, 50C, 150A, 150B, 150C) disposé dans un espace de support externe (52, 152) entre la surface de support faisant face vers l'extérieur du support de joint d'étanchéité et la surface faisant face vers l'intérieur du boîtier externe ;
au moins un premier joint d'étanchéité interne annulaire (55A, 55B, 55C, 155A, 155B, 155C) disposé dans un espace de support interne (57, 157) entre la surface de support faisant face vers l'intérieur du support de joint d'étanchéité et la surface faisant face vers l'extérieur du boîtier interne ;
le support de joint d'étanchéité ayant une largeur radiale maximale (44, 144) entre l'espace de support externe et l'espace de support interne ;
l'espace rotatif comprenant une partie espace en forme de col annulaire (42, 142) ayant une largeur radiale maximale (43, 143) entre la surface faisant face vers l'intérieur du boîtier externe et la surface faisant face vers l'extérieur du boîtier interne ;
la partie espace en forme de col de l'espace rotatif étant disposée entre la chambre d'échange de fluide et le support de joint d'étanchéité ; et
la largeur radiale maximale de la partie espace en forme de col de l'espace rotatif étant inférieure à la largeur radiale maximale du support de joint d'étanchéité.

2. Interface rotative selon la revendication 1, comprenant un filtre (70, 170) disposé dans l'espace rotatif entre la chambre d'échange de fluide et le support de joint d'étanchéité ; et éventuellement dans laquelle le filtre comprend un filtre à joint d'étanchéité poreux annulaire disposé dans l'espace rotatif entre la partie espace en forme de col de l'espace rotatif et le support de joint d'étanchéité et conçu pour protéger les premiers joints d'étanchéité interne et externe de contaminants fluides.

3. Interface rotative selon la revendication 1, comprenant un second joint d'étanchéité externe annulaire (50B, 150B) disposé dans l'espace de support externe entre la surface de support faisant face vers l'extérieur du support de joint d'étanchéité et la surface faisant face vers l'intérieur du boîtier externe, et un second joint d'étanchéité interne annulaire (55B, 155B) disposé dans l'espace de support interne entre la surface de support faisant face vers l'intérieur du support de joint d'étanchéité et la surface faisant face vers l'extérieur du boîtier interne.

4. Interface rotative selon la revendication 3, comprenant :
une chambre de fluide externe annulaire (53, 153) formée dans l'espace de support externe radialement entre la surface de support faisant face vers l'extérieur du support de joint d'étanchéité et la surface faisant face vers l'intérieur du boîtier externe et axialement entre le premier joint d'étanchéité externe et le second joint d'étanchéité externe ;
une chambre de fluide interne annulaire (58, 158) formée dans l'espace de support interne radialement entre la surface de support faisant face vers l'intérieur du support de joint d'étanchéité et la surface faisant face vers l'extérieur du boîtier interne et axialement entre le premier joint d'étanchéité interne et le second joint d'étanchéité interne ;
un fluide d'équilibrage sous pression dans la chambre de fluide externe ;
un fluide d'équilibrage sous pression dans la chambre de fluide interne ; et
dans laquelle les chambres de fluide externe et interne sont équilibrées en pression ;
et comprenant éventuellement un passage de fluide (49, 149) dans le support entre la chambre de fluide externe et la chambre de fluide interne et dans laquelle le fluide d'équilibrage sous pression dans la chambre de fluide externe communique avec le fluide d'équilibrage sous pression dans la chambre de fluide interne.

5. Interface rotative selon la revendication 1, comprenant :
un premier nombre de joints d'étanchéité externes annulaires disposés dans l'espace de support externe entre la surface de support faisant face vers l'extérieur du support de joint d'étanchéité et la surface faisant face vers l'intérieur du boîtier externe ;
un second nombre de joints d'étanchéité internes annulaires disposés dans l'espace de support interne entre la surface de support faisant face vers l'intérieur du support de joint d'étanchéité et la surface faisant face vers l'extérieur du boîtier interne ; et
le premier nombre de joints d'étanchéité externes annulaires étant égal au second nombre de joints d'étanchéité internes annulaires.

6. Interface rotative selon la revendication 1, dans laquelle le premier joint d'étanchéité externe comprend un joint d'étanchéité primaire annulaire (72A, 72B) et une bague d'appui annulaire (73A, 73B) disposée dans un presse-étoupe annulaire externe (151A, 151B) d'un corps de presse-étoupe (154A, 154B) du support de joint d'étanchéité ;
et éventuellement dans laquelle la bague d'appui est formée à partir du corps de presse-étoupe du support de joint d'étanchéité ;
et éventuellement dans laquelle la bague d'appui comprend une composition de matériau de bague, le corps de presse-étoupe du support de joint d'étanchéité comprend une composition de matériau de corps, et la composition de matériau de bague est la même que la composition de matériau de corps ;
et éventuellement dans laquelle le joint d'étanchéité primaire comprend une chemise de joint d'étanchéité (74) et un activateur de ressort de joint d'étanchéité (75).

7. Interface rotative selon la revendication 1, dans laquelle le support de joint d'étanchéité est accouplé en rotation au boîtier externe de telle sorte que le support de joint d'étanchéité tourne autour de l'axe central par rapport au boîtier interne avec une rotation du boîtier externe autour de l'axe central par rapport au boîtier interne ; et comprenant éventuellement un palier rotatif entre le support de joint d'étanchéité et le boîtier interne.

8. Interface rotative selon la revendication 7, dans laquelle :
le support de joint d'étanchéité comprend une pluralité de dents faisant face vers l'extérieur (61) en prise engrenée avec une pluralité correspondante de rainures faisant face vers l'intérieur (63) du boîtier externe de telle sorte que le support de joint d'étanchéité tourne avec la rotation du boîtier externe par rapport au boîtier interne ; et
le support de joint d'étanchéité comprend une interface anti-jeu (66, 67) entre chacune de la pluralité de dents faisant face vers l'extérieur du support de joint d'étanchéité et la pluralité correspondante de rainures faisant face vers l'intérieur du boîtier externe.

9. Interface rotative selon la revendication 1, dans laquelle :
le boîtier externe comprend une plaque de support annulaire (80, 180) conçue de manière fonctionnelle pour retenir le support de joint d'étanchéité axialement par rapport au boîtier externe ; et
la plaque de support annulaire comprend une pluralité de segments séparés (80A, 80B, 80C, 180A, 180B, 180C) fixés de manière amovible à une partie de corps (36, 136) du boîtier externe ;
selon lequel les segments arqués peuvent être détachés de la partie de corps du boîtier externe pour fournir un accès au support de joint d'étanchéité.

10. Interface rotative selon la revendication 9, dans laquelle le support de joint d'étanchéité comprend une partie de bride annulaire (64, 164) retenue de manière fonctionnelle axialement entre la partie de corps du boîtier externe et la plaque de support annulaire du boîtier externe ;
et éventuellement dans laquelle le boîtier externe comprend une plaque de recouvrement annulaire (81, 181) disposée axialement entre la plaque de support annulaire du boîtier externe et le support de joint d'étanchéité ;
et comprenant éventuellement un passage de drainage s'étendant radialement entre un premier segment et un second segment de ladite pluralité de segments séparés de ladite plaque de support annulaire.

11. Interface rotative selon la revendication 1, dans laquelle l'espace rotatif comprend un espace supérieur (41) s'étendant dans une première direction axiale à partir de la chambre d'échange de fluide et un espace inférieur (141) s'étendant dans une seconde direction axiale à partir de la chambre d'échange de fluide ;
le support de joint d'étanchéité (45) est disposé dans l'espace supérieur de l'espace rotatif entre la surface faisant face vers l'intérieur (35) du boîtier externe et la surface faisant face vers l'extérieur (25) du boîtier interne ;
l'espace supérieur comprend la partie espace en forme de col (42) ;
un second support de joint d'étanchéité annulaire (145) disposé dans l'espace inférieur de l'espace rotatif entre la surface faisant face vers l'intérieur (135) du boîtier externe et la surface faisant face vers l'extérieur (125) du boîtier interne ;
le second support de joint d'étanchéité comprend une seconde surface de support faisant face vers l'extérieur (146) opposée à la surface faisant face vers l'intérieur du boîtier externe et une seconde surface de support faisant face vers l'intérieur (147) opposée à la surface faisant face vers l'extérieur du boîtier interne ;
au moins un second joint d'étanchéité externe annulaire (150A, 150B, 150C) disposé dans un second espace de support externe (152) entre la seconde surface de support faisant face vers l'extérieur du second support de joint d'étanchéité et la surface faisant face vers l'intérieur du boîtier externe ;
au moins un second joint d'étanchéité interne annulaire (155A, 155B, 155C) disposé dans un second espace de support interne (157) entre la seconde surface de support faisant face vers l'intérieur du second support de joint d'étanchéité et la surface faisant face vers l'extérieur du boîtier interne ;
le second support de joint d'étanchéité ayant une largeur radiale maximale (144) entre le second espace de support externe et le second espace de support interne ;
l'espace inférieur de l'espace rotatif comprenant une seconde partie espace en forme de col annulaire (142) ayant une largeur radiale maximale (143) entre la surface faisant face vers l'intérieur du boîtier externe et la surface faisant face vers l'extérieur du boîtier interne ;
la seconde partie espace en forme de col de l'espace inférieur étant disposée entre la chambre d'échange de fluide et le second support de joint d'étanchéité ; et
la largeur radiale maximale de la seconde partie espace en forme de col de l'espace rotatif étant inférieure à la largeur radiale maximale du second support de joint d'étanchéité.

12. Interface rotative selon la revendication 1, dans laquelle le support de joint d'étanchéité a une largeur radiale minimale (48) depuis l'espace de support externe vers l'espace de support interne, et la largeur radiale maximale de la partie espace en forme de col de l'espace rotatif est inférieure à la largeur radiale minimale du support de joint d'étanchéité.

13. Interface rotative selon la revendication 1, dans laquelle :
le boîtier externe comprend une plaque de retenue annulaire (281) conçue de manière fonctionnelle pour retenir le support de joint d'étanchéité axialement par rapport au boîtier externe ;
la plaque de retenue a une surface de retenue annulaire (281A) faisant face vers une surface d'appui annulaire opposée (64A) du support et un espace de lubrification axial (278) entre la surface de retenue de la plaque de retenue et la surface d'appui du support ; et
le boîtier externe ayant un passage de fluide communiquant avec l'espace de lubrification axial et conçu de manière fonctionnelle pour fournir un fluide sous pression à l'espace de lubrification axial ;
et comprenant éventuellement un palier rotatif entre le support de joint d'étanchéité et le boîtier interne et le palier rotatif en communication fluidique avec l'espace de lubrification axial.

14. Interface rotative selon la revendication 8, dans laquelle quelle l'interface anti-jeu comprend un tampon d'usure (66, 67) entre chacune de la pluralité de dents faisant face vers l'extérieur du support de joint d'étanchéité et la pluralité correspondante de rainures faisant face vers l'intérieur du boîtier externe ; et éventuellement dans laquelle chaque tampon d'usure est lié (91A, 91B) à la pluralité correspondante respective de dents faisant face vers l'extérieur du support de joint d'étanchéité.

15. Interface rotative selon la revendication 8, dans laquelle chacune de la pluralité de rainures faisant face vers l'intérieur du boîtier externe comprend une surface d'appui rotative (63A, 63B) faisant face vers une surface d'usure opposée (66A, 67A) de chacune de la pluralité correspondante de dents faisant face vers l'extérieur du support de joint d'étanchéité et dans laquelle chacune des surfaces d'appui rotatives de la pluralité de rainures faisant face vers l'intérieur du boîtier externe est orientée sur un plan imaginaire respectif (90A, 90D) s'étendant radialement à partir de l'axe central ; et éventuellement dans laquelle la surface d'usure opposée de chacune de la pluralité correspondante de dents faisant face vers l'extérieur du support de joint d'étanchéité est orientée sur un plan imaginaire respectif (90A, 90B) s'étendant radialement à partir de l'axe central.
